(19) Europäisches Patentamt
European Patent Office
Office européen des brevets

(11) Veröffentlichungsnummer : **0 082 383**
**B1**

(12) # EUROPÄISCHE PATENTSCHRIFT

(45) Veröffentlichungstag der Patentschrift : **28.08.85**

(51) Int. Cl.⁴ : **C 08 G 63/68**

(21) Anmeldenummer : **82111231.5**

(22) Anmeldetag : **04.12.82**

(54) **Verfahren zur Herstellung von Polycarbonaten mit Sulfonanilid-Endgruppen.**

(30) Priorität : **18.12.81 DE 3150273**

(43) Veröffentlichungstag der Anmeldung : **29.06.83 Patentblatt 83/26**

(45) Bekanntmachung des Hinweises auf die Patenterteilung : **28.08.85 Patentblatt 85/35**

(84) Benannte Vertragsstaaten : **DE FR GB IT NL**

(56) Entgegenhaltungen : **EP-A- 0 000 396**

(73) Patentinhaber : **BAYER AG**
**Konzernverwaltung RP Patentabteilung**
**D-5090 Leverkusen 1 Bayerwerk (DE)**

(72) Erfinder : **Krishnan, Sivaram, Dr.**
**159 Fairview Drive**
**New Martinsville West Virginia 26155 (US)**
Erfinder : **Cohnen, Wolfgang, Dr.**
**Heymannstrasse 36**
**D-5090 Leverkusen 1 (DE)**
Erfinder : **Neuray, Dieter, Dr.**
**Sebastian-Kneipp-Weg 6**
**D-4150 Krefeld (DE)**

**EP 0 082 383 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschriebung**

Gegenstand der vorliegenden Erfindung ist ein Verfahren zur Herstellung von aromatischen Polycarbonaten mit Mw von 100 000 nach dem bekannten Zweiphasengrenzflächenverfahren aus Diphenolen, das dadurch gekennzeichnet ist, daß man als kettenabbrecher aromatische Sulfonsäureanilide in Mengen von 2 Mol% bis 20 Mol%, vorzugsweise in Mengen von 2,5 Mol% bis 10 Mol%, bezogen auf Mole an eingesetzten Diphenolen, verwendet.

Gegenstand der vorliegenden Erfindung sind auch die erfindungsgemäß erhältlichen aromatischen Polycarbonate. Die erfindungsgemäß erhältlichen Polycarbonate haben bessere selbstverlöschende Eigenschaften verglichen mit Polycarbonaten ohne Sulfonamid-Endgruppen.

Verbesserungen der flammverzögernden Eigenschaften von thermoplastischen aromatischen Polycarbonaten wurden schon auf verschiedenen Wegen versucht, wie beispielsweise durch Einarbeitung von Schwefel-enthaltenden Endgruppen. Gemäß der US-Patentschrift US-A-4 188 475 oder des Europäischen Patentes 396 oder der DE-A-2 732 556 (Le A 18 230) sind Polycarbonate mit Aryl-Sulfonyl-Endgruppen bekannt, aber diese verleihen den Polycarbonaten keine ausreichende Flammhemmenden Eigenschaften, wie sie für einige Anwendungen gebraucht werden, da sich nach UL-subject-94 nur die Kl ssifizierung V2 bei einer Dicke von 1,6 mm erreichen.

Überraschenderweise erreichen die erfindungsgemäßen Polycarbonate mit Sulfonanilid-Endgruppen die Klassifizierung V1 in der gleichen Wanddicke nach gleichem Meßverfahren.

Ein weiterer Vorteil der erfindungsgemäß erhältlichen Polycarbonate ist die Vermeidung von Korrosion während der Verarbeitung bei höheren Temperaturen.

Gemäß DE-A-2 506 726 sind Perfluoralkansulfonamide als Entformungsmittel für Polycarbonate bekannt. Eine Flammverzögerungswirkung ist in diesem Zusammenhand nicht beschrieben.

Es ist prinzipiell möglich, alle aromatischen Sulfonanilide für das erfindungsgemäße Verfahren zu verwenden ; so z. B. substituierte und unsubstituierte aromatische Sulfonanilide, substituierte und unsubstituierte Naphthylsulfonanilide, substituierte und unsubstituierte Anthracen-Sulfonanilide, substituierte und unsubstituierte hetero-aromatische Sulfonanilide. Als Substituenten sind in diesem Zusammenhang beispielsweise Alkylaryl oder Halogen zu verstehen.

Benzolsulfonamide, welche vorzugsweise gemäß der vorliegenden Erfindung eingesetzt werden können sind die der Formel (I)

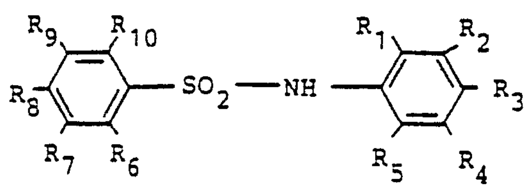

(I)

worin $R_1$-$R_{10}$ identisch oder verschieden sind und H, Alkyl mit vorzugsweise 1 bis 18 C-Atomen, Cycloalkyl mit vorzugsweise 5 bis 6 C-Atomen, Aryl mit vorzugsweise 6 bis 16 C-Atomen, Cyan, wobei vorzugsweise 2-3 Cyan-Substituenten pro aromatischer Ring möglich sind, oder Halogen, wobei vorzugsweise Chlor oder Brom genannt sind.

Beispiele von Aniliden die beispielsweise gemäß der vorliegenden Erfindung gebräuchlich sind, sind N-Phenyl-benzolsulfonamid (Benzolsulfonanilid), N-p-Methylphenylbenzolsulfonamid, N-p-Methylphenylp-toluylsulfonamid, N-(2,4-Dimethylphenyl) benzolsulfonamid, N-(2,4-Dichlorphenyl) benzolsulfonamid, N-(2,4,6-trichlorphenyl) benzolsulfonamid, N-Phenyl-2,4,6-trichlorphenylsulfonamid, N-(p-Dodecylphenyl) benzolsulfonamid, N-(3-Cyanophenyl) benzolsulfonamid, N-(Naphthyl) benzosulfonamid und N-(phenylnaphthyl) sulfonamid.

Andere Variationen von Substituenten am Phenylring benachbart zu Sulfongruppe und am Phenylring benachbart zur N-H-Gruppe können als erfindungsgemäße Kettenregler, auch verwendet werden.

Die folgenden aromatischen Sulfonanilide werden vorzugsweise eingesetzt : N-Phenyl-benzol-sulfonamid, N-(p-Methylphenyl)-benzol-sulfonamid und N-Phenyl-2,4,6-trichlorbenzol-sulfonamid.

Die vorzugsweise erfindungsgemäß erhältlichen aromatischen Polycarbonate werden durch folgende Formel (II) charakterisiert.

$$E - [O - Z - O - \underset{\overset{\parallel}{O}}{C} -]_n O - Z - O - E' \qquad (II)$$

worin R und E' gleich oder verschiedene Reste der Formel (III) sind

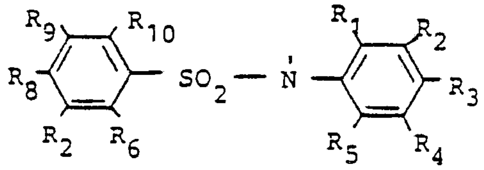

(III)

worin die Reste $R_1$ bis $R_{10}$ denen der Formel (I) entsprechen.

In Formel (II) ist Z ein bivalenter aromatischer Rest, vorzugsweise mit 6 bis 30 C-Atomen, abgeleitet von Diphenolen der Formel (IV)

HO—Z—OH (IV)

« n » ist der Polymerisationsgrad, der jeweils aus Gewichtsmittelmolekulargewichten Mw der aromatischen Polycarbonate von ungefähr 10 000 bis 100 000 resuliert.

Die Herstellung der erfindungsgemäßen Polycarbonate mit Hilfe des Phasengrenzflächenverfahrens ist bekannt. Die erfindungsgemäßen Polycarbonate werden durch Reaktion von Bisphenolen, insbesondere Dihydroxydiarylalkenen oder -cycloalkenen- mit Phosgen erhalten ; Dihydroxydiarylalkane und Cycloalkane, in welchen die Arylkerne in ortho-Stellung zu den phenolischen Hydroxylgruppen substituiert sind, sind ebenfalls üblich zusätzlich zu den unsubstituierten Dihydroxydiarylalkanen und -cycloalkanen-. Die erfindungsgemäß hergestellten Polycarbonate können auch verzweigt sein.

Die bekannten Katalysatoren wie Triethylamin und die üblichen Lösungsmittel Reaktionstemperaturen und Mengen Alkali für das Zweiphasen-Grenzflächen-Verfahren sind gleichfalls bekannt, wie z. B. beschrieben in Hermann Schnelle : « Chemistry and Physics of Polycarbonates, Interscience Publishers, New York, 1964 ».

Die erfindungsgemäßen Polycarbonate haben ein mittleres Molekulargewichtsmittel (Mw) zwischen 10 000 und 100 000 vorzugsweise zwischen 20 000 und 80 000, das durch die relative Lösungsviskosität der Polycarbonate bestimmt werden kann (gemessen in Methylenchlorid bei 25 °C und einer Konzentration von 0,5 Gew.%). Polycarbonate von halogenfreien Diphenolen sind bevorzugt.

Beispiele gebräuchlicher Diphenole sind
Hydrochinon,
Resorcin,
4,4'-Dihydroxydiphenyl,
bis-Hydroxyphenylalkane, wie z. B.
$C_1$-$C_8$-Alkylen sind $C_2$-$C_8$-Alkyliden-bisphenole,
Bis-hydroxyphenyl-cycloalkane, wie z. B.
$C_5$-$C_6$-Cycloalkylen und $C_5$-$C_6$-Cycloalkyliden-bisphenolen, Bis-hydroxyphenylsulfide, = ketone, = sulfoxyde oder = sulfone und α,α' Bishydroxyphenyl-diisopropylbenzol sowie die korrespondierenden kern-halogenierten und kern-alkylierten Verbindungen.

Weitere für die Herstellung von Polycarbonaten gebräuchliche Diphenole sind im folgenden US-Patenten
Nr. 3 028 265
Nr. 3 148 172
Nr. 2 991 273
Nr. 3 271 367
und Nr. 2 999 846 sowie in den deutschen Offenlegungsschriften
Nr. 2 063 050
Nr. 2 063 052
Nr. 2 211 957
Nr. 2 211 956 aufgeführt.

Geeignete Diphenole sind beispielsweise
2,2-Bis-(4-hydroxyphenyl)-propan,
2,2-Bis-(4-hydroxy-3,5-dimethyl-phenyl)-propan,
Bis-(4-hydroxyphenyl)-methan,
Bis-(4-hydroxy-3,5-dimethyl-phenyl)-methan,
Bis-(4-hydroxyphenyl)-sulfid und
Bis-(4-hydroxyphenyl)-sulfon.

Erfindungsgemäß geeignete hslogenierte Diphenole sind beispielsweise :
2,2-Bis-(3,5-dichlor-4-hydroxyphenyl)-propan,
2,2-Bis-(3,5-dibrom-4-hydroxyphenyl)-propan,
2,2-Bis-(3-chlor-4-hydroxyphenyl)-propan,
2-(3,5-dichlor-4-hydroxyphenyl)-2-(4-hydroxyphenyl)-propan,
2,2-Bis-(3-chlor-5-methyl-4-hydroxyphenyl)-propan,
2,2-Bis-(3-brom-4-hydroxy-phenyl)-propan und ähnliche, wie sie durch folgende Strukturformel beschrieben sind ;

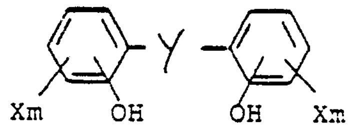

worin Y $—CH_2—$ oder

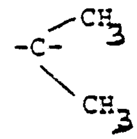

ist, X Halogen, vorzugsweise Chlor oder Brom, und m = 1, 2, 3 oder 4 ist. Diese halogenierten Diphenole werden als Comonomere vorzugsweise in Mengen bis zu 10 Mol%, bezogen auf Mole Diphenole, mitverwendet.

Kleine Mengen an trifunktionellen oder mehr als trifunktionellen Verbindungen können bei der Herstellung der Polycarbonate mitverwendet werden, um die Polymerketten zu verzweigen, wobei vorzugsweise Mengen zwischen 0,05 und 2,0 Mol% bezogen auf Mole an eingesetzten Diphenolen, von trifunktionellen oder mehr als trifunktionellen Verbindungen speziell von Verbindungen mit drei oder vier phenolischen Hydroxygruppen eingesetzt werden können.

Polycarbonate dieses Typs sind z. B. beschrieben in

DE-A-1 570 533,
DE-A-1 595 762,
DE-A-2 116 974,
DE-A-2 113 347,
GB-A-1 079 821 und
US-A-3 544 514.

Einige Beispiele für Verbindungen mit drei oder mehr als drei phenolischen Hydroxylgruppen, die gebraucht werden können, sind :

Phloroglucin,
4,6-Dimethyl-2,4,6-tri-(4-hydroxyphenyl)-hepten-2,
4,6-Dimethyl-2,4,6-tri-4-hydroxyphenyl-heptan,
1,4,5-Tri-(4-hydroxyphenyl)-benzol,
1,1,1-Tri-(4-hydroxyphenyl)-ethan,
Tri-(4-hydroxyphenyl)-methan,
2,2-Bis-4,4-bis(4-hydroxyphenyl)-cyclohexyl-propan,
2,4-Bis-(4-hydroxyphenyl-isopropyl) phenyl ;
Hexa-[-4(-4-hydroxyphenyl-isopropyl)-phenyl]-orthoterephthalsäureester,
Tetra-(4-hydroxyphenyl)-methan,
Tetra-[4-(4-hydroxyphenyl-isopropyl)-phenoxy]-methan,
1,4-Bis(4',4"-dihydroxytriphenyl) methylbenzol.

Einige Beispiele andere trifunktioneller Verbindungen sind

2,4-Dihydroxybenzoesäure,
Trimesinsäure,
Cyanurchlorid,
3,3-Bis-(4-hydroxyphenyl)-3-oxo-2,3-dihydroindol, sowie z. B. 3,3-Bis-(4-hydroxy-3-methyl-phenyl)-2-oxo-2,3-dihydroindol.

Die erfindungsgemäßen Polycarbonate können isoliert werden nach bekannten Methoden, z. B. durch Entgasungsextrusion. Sie können thermoplastisch verarbeitet werden z. B. zu spritzgegossenen Prüfkörpern, extrudierten Halbzeugen oder Folien. Sie können mit Hitzestatbilisatoren, UV-Stabilisatoren, Entformungshilfsmitteln u. a. in üblicher Weise versehen werden.

Ferner können ihnen Füllstoffe, Pigmente, Verstärkungsmittel wie z. B. Glasfasern zugesetzt werden, wie dies für konventionelle Polycarbonate bekannt ist.

I. Vergleichsbeispiele

Polycarbonate mit Phenol als Kettenabbrecher

1. 454 Gew.-Teile 2,2-(4,4'-Dihydroxydiphenyl)-propan und 6,2 Gew.-Teile Phenol werden in 1,5 l Wasser suspendiert. Der Sauerstoff wird aus der Reaktionsmischung, die sich in einem 3-Halskolben mit Rührer und Gaseinleitungsrohr befindet, entfernt indem man 15 min lang Stickstoff durch die Reaktionsmischung leitet. Unter Rühren werden 355 Gew.-Teile einer 45 %-gen Natriumhydroxylösung (wässrig) und 1 000 Gew.-Teile Methylenchlorid zugefügt. Die Mischung wird auf 25 °C gekühlt. Während die Mischung weiter durch Kühlen auf 25 °C gehalten wird, werden 237 Gew.-Teile Phosgen innerhalb von 120 min zugefügt. Eine zusätzliche Menge von 75 Gew.-Teilen einer 45 %igen wässrigen Natriumhydroxydlösung werden nach 15-30 min zugefügt, oder nachdem die Absorption von Phosgen

begonnen hat. 1,6 Gew.-Teile Triethylamin werden zu der Lösung gegeben und diese Mischung wird weitere 15 min gerührt. Eine hochviskose Lösung wird erhalten, deren Viskosität durch Zugabe von Methylenchlorid reguliert wird. Die wässrige Phase wird abgetrennt. Die organische Phase wird mit Wasser gewaschen bis sie frei von Alkalien und Salzen ist. Das Polycarbonat wird aus der gereinigten organischen Lösung isoliert und getrocknet. Das Polycarbonat hat eine Viskosität von 1,30, gemessen an einer 0,5 %igen Lösung in Methylenchlorid bei 25 °C. Dieser Wert entspricht einem mittleren Molekulargewichtsmittel von ungefähr 32 000. Das so erhaltene Polycarbonat wird extrudiert und granuliert.

2. Ein aromatisches Polycarbonat auf Basis von 94,9 Mol% Bisphenol A und 5,1 Mol% 2,2-(4,4'-Dihydroxy-3,3', 5,5'-tetrabrom-diphenyl)-propan (Tetrabrombisphenol A) mit einer relativen Lösungsviskosität $\eta_{rel}$ von 1,27 hergestellt nach Beispiel 1.

3. Ein verzweigtes Polycarbonat auf Basis von 99,5 Mol% Bisphenol A und 0,5 Mol% Isatinbisphenol mit einer relativen Lösungsviskosität von $\eta_{rel}$ 1,30 wurde gemäß Beispiel 1 hergestellt.

II. Die erfindungsgemäßen Polycarbonate

4. Eine Lösung wird hergestellt aus 3,192 kg 2,2-Bis-(4-hydroxyphenyl)-propan (Bisphenol A) (14 Mol), 2,53 kg einer 45 %igen wässrigen Natriumhydroxydlösung und 15 Litern destillierten Wassers. Nach Zugabe von 34 kg Methylenchlorid, 127 g Benzolsulfonanilids (3,9 Mol%) gelöst in 1 kg Methylenchlorid werden bei Raumtemperatur unter Rühren 2,8 kg Phosgen bei 20-25 °C eingeleitet. Der pH-Wert wird während der Phosgenierung bei 13-14 gehalten, indem weitere 26,3 kg einer 6,5 %igen wässrigen Natriumhydroxydlösung zugefügt werden. 15 ml Triethylamin werden zugefügt und anschließend wird die Lösung für weitere 30 min gerührt. Die obere wässrige Phase wird abgetrennt, die organische Phase angesäuert und dann gewaschen bis sie frei von Elektrolyten ist. Die Methylenchlorid-Lösung wird eingeengt und das so erhaltene Polycarbonat wird 8h bei 110 °C getrocknet. Die relative Lösungsviskosität beträgt $\eta_{rel}$ 1,26.

5. Ein Polycarbonat auf Basis Bisphenol A wird hergestellt gemäß Beispiel 4 indem 3,9 Mol% der Verbindung A in Tabelle I gebraucht werden. Die relative Lösungsviskosität des so hergestellten Polycarbonats beträgt $\eta_{rel}$ 1,32.

6. Ein Polycarbonat auf Basis Bisphenol A, hergestellt gemäß Biespiel 4 durch Verwendung von 3,9 Mol% der Verbindung B in Tabelle I mit einer relativen Lösungsviskosität von $\eta_{rel}$ 1,274.

7. Ein aromatisches Polycarbonat auf Basis von 94,9 Mol% Bisphenol A und 5,1 Mol% 2,2-(4,4-Dihydroxy-3,3'-5,5'-tetrabromdiphenyl)-propan (Tetrabrombisphenol A) mit Benzolsulfonanilid (3 Mol%) als Kettenregler mit einer relativen Lösungsviskosität von $\eta_{rel}$ 1,268.

8. Ein verzweigtes Polycarbonat auf Basis von 99,50 Mol% Bisphenol A und 0,5 Mol% 3,3-Bis-hydroxy-3-methylphenyl-2-oxo-2,3-dihydroxy-indol mit Benzosulfonanilid (4,2 mol%) als Kettenregler und mit einer relativen Lösungsviskosität von $\eta_{rel}$ 1,25.

(Siehe Tabelle 1 Seite 6 f.)

Tabelle 1

| Polycarbonat nach Beispiel | Brandverhalten nach Underwriters'Laboratories Bull 94 / Wanddicke des Prüfkörpers 3,2 mm | 1,6 mm | $\eta_{rel}$ | Einfrier--Temperatur °C |
|---|---|---|---|---|
| 1 | V2 | V2 | 1,30 | 150 |
| 2 | V0 | V2 | 1,30 | 158 |
| 3 | V2 | V2 | 1,296 | 153 |
| 4 | V0 | V1 | 1,26 | 154 |
| 5A | | V1 | 1,32 | 149 |
| 6B | | V1 | 1,27 | 150 |
| 7 | V0 | V0 | 1,27 | 158 |
| 8 | V0 | V0 | 1,25 | 153 |

A = 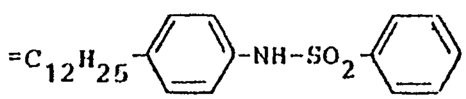 ; B = 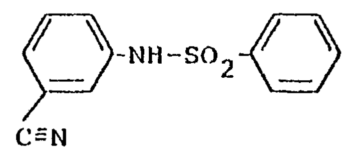

Das Brandverhalten nach UL-Bulletin 94 in den Wanddicken 1,6 und 3,2 mm wurde an getemperten Prüfkörpern bestimmt.

Temperatur-Bedingungen : 130 °C/2 Tage.

**Patentansprüche**

1. Verfahren zur Herstellung von aromatischen Polycarbonaten mit $\overline{M}w$ (Gewichtsmittelmolekulargewicht) von 10 000 bis 100 000 nach dem bekannten Zweiphasengrenzflächenverfahren aus Diphenolen, dadurch gekennzeichnet, daß man als Kettenabbrecher aromatische Sulfonsäureanilide in Mengen von 2 Mol% bis 20 Mol%, bezogen auf Mole an eingesetzten Diphenolen, verwendet.

2. Verfahren gemäß Anspruch 1, dadurch gekennzeichnet, daß man die aromatischen Sulfonsäureanilide in Mengen von 2,5 Mol% bis 10 Mol% verwendet.

3. Verfahren gemäß Ansprüche 1 und 2, dadurch gekennzeichnet, daß die Diphenole halogenfrei sind.

4. Verfahren gemäß Anspruch 3, dadurch gekennzeichnet, daß halogenierte Diphenole als Comonomere mitverwendet werden.

5. Verfahren gemäß Ansprüche 1 bis 4, dadurch gekennzeichnet, daß trifunktionelle oder mehr als trifunktionelle Verbindungen als Verzweiger mitverwendet werden.

6. Verfahren gemäß Ansprüche 1 bis 5, dadurch gekennzeichnet, daß die aromatischen Sulfonanilide folgende allgemeine Struktur der Formel (I) aufweisen.

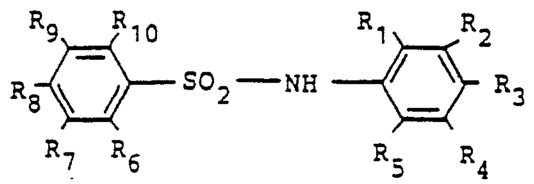

(I)

worin $R_1$ bis $R_{10}$ gleich oder verschieden sind und H, Alkyl, Cycloalkyl, Aryl, Cyano oder Halogen bedeuten.

7. Polycarbonate erhältlich nach dem Verfahren gemäß Ansprüche 1-6.

8. Aromatische Polycarbonate gemäß Anspruch 7 der allgemeinen Formel (II)

$$E - [O - Z - O - \underset{\overset{\|}{O}}{C} -]_n O - Z - O - E' \qquad (II)$$

worin E und E′ gleich oder verschieden sind und Reste der Formel (III) sind,

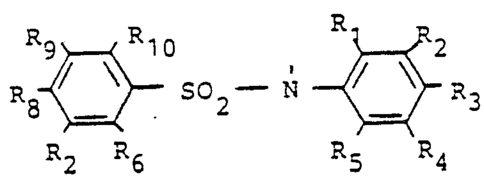

(III)

worin $R_1$-$R_{10}$ gleich oder verschieden sind und H, $C_1$-$C_{18}$-Alkyl, $C_5$-$C_6$-Cycloalkyl, $C_6$-$C_{16}$-Aryl, Cyano oder Halogen bedeuten, und worin Z ein bivalenter aromatischer Rest ist, der von einer Verbindung folgender Formel abgeleitet ist,

HO—Z—OH

und worin « n » der Polymerisationsgrad ist, der aus einem Molekulargewicht ($\overline{M}w$) von 10 000 bis 100 000 resultiert.

**Claims**

1. Process for the preparation of aromatic polycarbonates with $\overline{M}w$ (weight average molecular weight) of 10,000 to 100,000 from diphenols by the known two-phase interface process, characterised in that aromatic sulphonic acid anilides are used as chain stoppers in amounts of 2 mol% to 20 mol%, based on the mols of diphenols employed.

2. Process according to Claim 1, characterised in that the aromatic sulphonic acid anilides are used in amounts of 2.5 mol% to 10 mol%.

3. Process according to Claims 1 and 2, characterised in that the diphenols are halogen-free.

4. Process according to Claim 3, characterised in that halogenated diphenols are also used as comonomers.

5. Process according to Claims 1 to 4, characterised in that trifunctional or higher than trifunctional compounds are used as branching agents.

6. Process according to Claims 1 to 5, characterised in that the aromatic sulphonanilides have the following general structure of the formula (I)

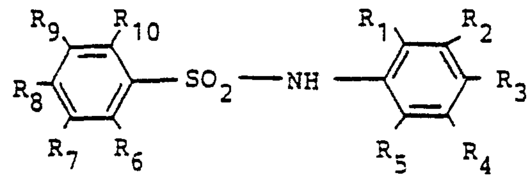

(I)

wherein $R_1$ to $R_{10}$ are identical or different and denote H, alkyl, cycloalkyl, aryl, cyano or halogen.

7. Polycarbonates obtainable by the process according to Claims 1-6.

8. Aromatic polycarbonates according to Claim 7 of the general formula (II)

$$E - [O - Z - O - \underset{\underset{O}{\parallel}}{C} -]_n O - Z - O - E' \qquad (II)$$

wherein E and E′ are identical or different and are radicals of the formula (III)

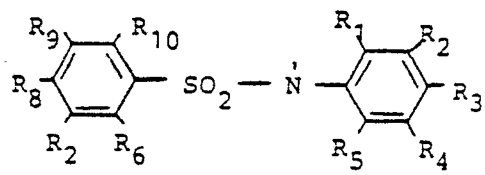

(III)

wherein $R_1$-$R_{10}$ are identical or different and denote H, $C_1$-$C_{18}$-alkyl, $C_5$-$C_6$-cycloalkyl, $C_6$-$C_{16}$-aryl, cyano or halogen, and wherein Z is a divalent aromatic radical which is derived from a compound of the following formula,

HO—Z—OH

and wherein « n » is the degree of polymerisation which results from a molecular weight ($\overline{M}w$) of 10,000 to 100,000.

**Revendications**

1. Procédé de production de polycarbonates aromatiques de $\overline{M}p$ (moyenne en poids du poids moléculaire) de 10 000 à 100 000 par le procédé connu à l'interface entre deux phases à partir de diphénols, caractérisé en ce qu'on utilise comme agents de terminaison de chaîne des anilides d'acides sulfoniques aromatiques en quantités de 2 à 20 moles% par rapport aux moles de diphénols utilisés.

2. Procédé suivant la revendication 1, caractérisé en ce qu'on utilise les anilides d'acides sulfoniques aromatiques en quantités de 2,5 à 10 moles%.

3. Procédé suivant les revendications 1 et 2, caractérisé en ce que les diphénols sont dépourvus d'halogènes.

4. Procédé suivant la revendication 3, caractérisé en ce qu'on utilise en même temps des diphénols halogénés comme comonomères.

5. Procédé suivant les revendications 1 à 4, caractérisé en ce qu'on utilise en même temps comme agents de ramification des composés à fonctionnalité égale ou supérieure à trois.

6. Procédé suivant les revendications 1 à 5, caractérisé en ce que les sulfanilides aromatiques présentent la structure générale suivante de formule (I)

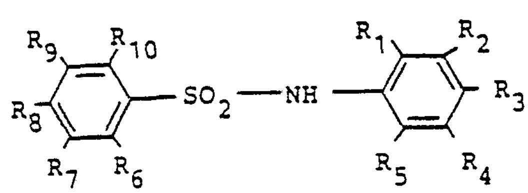

(I)

dans laquelle $R_1$ à $R_{10}$ sont égaux ou différents et représentent H, un groupe alkyle, cycloalkyle, aryle, cyano ou un halogène.

7. Polycarbonates pouvant être obtenus par le procédé suivant les revendications 1 à 6.
8. Polycarbonates aromatiques suivant la revendication 7, de formule générale (II)

$$E - [-O - Z - O - \underset{\underset{O}{\|}}{C} -]_n - O - Z - O - E' \qquad (II)$$

dans laquelle E et E' sont égaux ou différents et représentent des restes de formule (III)

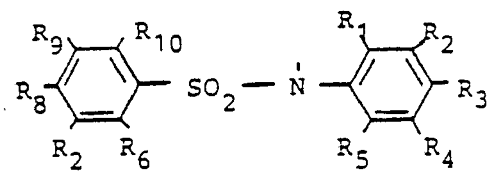

(III)

dans laquelle $R_1$-$C_{10}$ sont égaux ou différents et représentent H, un groupe alkyle en $C_1$ à $C_{18}$, cycloalkyle en $C_5$-$C_6$, aryle en $C_6$ à $C_{16}$, cyano ou un halogène, et Z est un reste aromatique bivalent qui est dérivé d'un composé de formule suivante

HO—Z—OH

et « n » désigne le degré de polymérisation qui résulte d'un poids moléculaire ($\overline{M}p$) de 10 000 à 100 000.